# DEMANDE DE BREVET EUROPEEN

(11) **EP 4 269 815 A1**
(43) Date de publication de la demande: **01.11.2023**
(21) Numéro de dépôt: 22169829.3
(22) Date de dépôt: 25.04.2022
(51) Int. Cl.: F16B 2/10, F16B 2/18, B30B 15/02

(54) **PORTE-OUTIL POUR PRESSE D'ASSEMBLAGE**

(71) Demandeur: ROLEX SA, 1211 Genève 26 (CH)
(72) Inventeur: PARISOT, Guillaume, 74350 Copponex (FR)
(74) Mandataire: Moinas & Savoye SARL

(57) **Abrégé**

Abrégé descriptif :

Porte-outil (10) pour presse (100), notamment pour presse d'assemblage (100), comprenant :
- un axe (A11),
- un organe d'actionnement (14), et
- des éléments de retenue (17a, 17b, 17c, 17d) agencés pour retenir un outil (20),
le porte-outil étant configuré et/ou agencé de sorte que les éléments de retenue (17a, 17b, 17c, 17d) sont déplaçables d'une position activée à une position désactivée sous l'effet d'un déplacement, dans un premier sens, de l'organe d'actionnement (14), notamment sous l'effet d'un déplacement élémentaire, dans le premier sens, de l'organe d'actionnement (14).

## Description

L'invention concerne un porte-outil pour presse. L'invention concerne aussi une presse comprenant un tel porte-outil. L'invention concerne encore un procédé de fonctionnement d'un tel porte-outil.

Le chassage est une technique bien connue du domaine horloger. Celle-ci est usuellement mise en œuvre par le biais de potences ou de presses comprenant un outil prévu pour appliquer une force sur un premier composant à l'encontre d'un deuxième composant reposant sur un bâti de la presse, de sorte à faire pénétrer des conformations des premier et deuxième composants l'une dans l'autre. Il s'agit généralement d'un outil dédié, adapté à la géométrie du premier composant, qui est interchangeable afin de permettre l'assemblage de toutes sortes de composants sur une même potence ou presse. Ainsi, un opérateur ou une opératrice peut être amené à changer fréquemment d'outils pour réaliser différentes gammes d'assemblages au cours, par exemple, d'une même journée.

Cette opération de changement d'outils peut s'avérer fastidieuse car elle requiert un maintien et/ou une manipulation prolongée de l'outil afin de le monter de manière adéquate sur un porte-outil, par exemple par vissage. Des opérations de changement d'outil répétées fréquemment peuvent engendrer à terme des risques de troubles musculo-squelettiques (TMS) chez un opérateur ou une opératrice.

Le document JP6713010B2 divulgue une solution représentative de l'état de l'art, dans laquelle un outil d'une presse manuelle est fixé à un porte-outil par le biais d'une vis. Cette vis est vissée sur le porte-outil selon une direction perpendiculaire à l'axe longitudinal de l'outil, afin que l'extrémité de cette dernière puisse appliquer une force radiale à l'encontre dudit outil et ainsi le maintenir au sein d'un logement formé sur le porte-outil. L'opération de montage de l'outil requiert ainsi le maintien de l'outil au sein du porte-outil pendant l'étape de vissage. L'opérateur ou l'opératrice doit donc à la fois procéder au vissage de la vis et au maintien de l'outil au sein du porte-outil durant l'opération de montage.

Il est également connu de visser directement un outil sur un porte-outil. A cet effet, l'outil comprend un filetage prévu pour coopérer avec un taraudage formé sur le porte-outil, ou inversement. Dans ce cas de figure, l'opérateur doit manipuler, en particulier en rotation et en translation, un outil pouvant être lourd, et ce dans un espace limité.

Le document EP3424645B1 divulgue quant à lui une solution de type baïonnette, plus particulièrement adaptée à la mise en œuvre d'un accouplement destiné à relier un outil interchangeable à un appareil de presse portatif. A cet effet, un outil interchangeable comprend notamment des éléments d'emboîtement prévus pour coopérer avec des éléments de retenue d'un porte-outil, une fois l'outil introduit au sein du porte-outil et mis en rotation au sein de ce dernier. Les éléments d'emboîtement et de retenue sont fixes relativement respectivement à l'outil et au porte-outil. Ainsi, ce sont les manipulations effectuées par l'opérateur ou par l'opératrice, notamment la mise en rotation de l'outil, qui permettent la coopération des éléments d'emboîtement et de retenue.

Le but de l'invention est de fournir un porte-outil permettant d'améliorer les porte-outils connus de l'art antérieur. En particulier, l'invention propose un porte-outil qui permette une fixation aisée, fiable et rapide d'un outil sur le porte-outil.

Selon l'invention, un porte-outil est défini par la revendication 1.

Des modes de réalisation du porte-outil sont définis par les revendications 2 à 10.

Selon l'invention, un outil est défini par la revendication 11.

Selon l'invention, une presse est définie par la revendication 12.

Selon l'invention, un procédé de fonctionnement est défini par la revendication 13.

Des modes d'exécution du procédé de fonctionnement sont définis par les revendications 14 et 15.

Les dessins annexés représentent, à titre d'exemple, un mode de réalisation d'une presse selon l'invention.
La figure 1 est une vue en perspective d'un mode de réalisation d'une presse.
La figure 2 est une vue de détail de la presse au niveau d'un porte-outil.
La figure 3 est une vue de dessus du porte-outil.
La figure 4 est une vue de dessus du porte-outil laissant apparaître des éléments du porte-outil (non visibles sur la figure 3).
La figure 5 est une vue en coupe longitudinale du porte-outil selon le plan A-A de la figure 3, des éléments de retenue du porte-outil se trouvant en position activée.
La figure 6 est une vue en coupe longitudinale du porte-outil selon le plan B-B de la figure 3, les éléments de retenue du porte-outil se trouvant en position activée.
La figure 7 est une vue en coupe longitudinale du porte-outil selon le plan C-C de la figure 3, les éléments de retenue du porte-outil se trouvant en position activée.
La figure 8 est une vue en coupe longitudinale du porte-outil selon le plan C-C de la figure 3, les éléments de retenue du porte-outil se trouvant en position désactivée.
La figure 9 est une vue en coupe longitudinale du porte-outil selon le plan A-A de la figure 3, les éléments de retenue du porte-outil se trouvant en position désactivée.

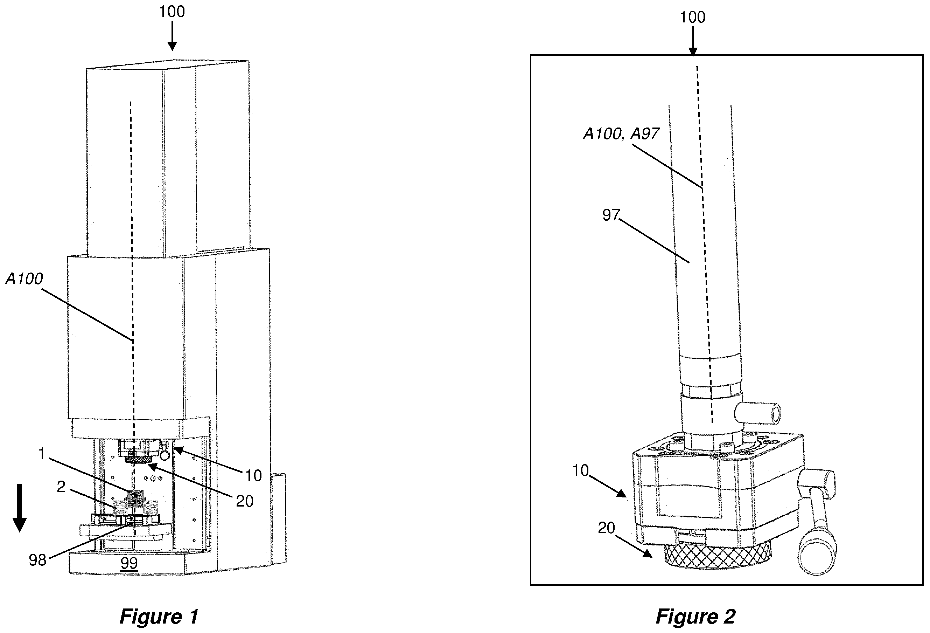

Un mode de réalisation d'une presse 100 selon l'invention est décrit ci-après en référence aux figures, en particulier en référence aux figures 1 et 2.

La presse 100 (ou potence) est prévue pour permettre le chassage d'un premier composant 1 à l'encontre d'un deuxième composant 2, selon un axe longitudinal d'axe A100. En particulier, l'opération de chassage consiste à faire pénétrer, notamment à faire pénétrer en force, une première conformation de l'un des composants dans une deuxième conformation de l'autre des composants.

Pour réaliser l'opération de chassage, la presse applique un effort sur le premier composant 1 par l'intermédiaire d'un outil 20, en particulier par l'intermédiaire d'une bague de chassage 22. Cet effort est repris par le deuxième composant 2, puis par un posage 98 sur lequel est disposé le deuxième composant 2, puis par un bâti 99 de la presse 100 sur lequel est disposé ou fixé le posage 98.

La bague de chassage 22 permet notamment :
- d'assurer un bon positionnement, en particulier une bonne orientation, du premier composant pendant le chassage, et
- de limiter les zones de pression intense sur le premier composant afin de ne pas le marquer.

Le posage 98 permet notamment :
- d'assurer un bon positionnement, en particulier une bonne orientation, du deuxième composant pendant le chassage, et
- de limiter les zones de pression intense sur le deuxième composant afin de ne pas le marquer.

La presse 100 comprend un porte-outil 10 et un outil 20. L'outil 20 est monté sur la presse 100 par l'intermédiaire du porte-outil.

La figure 2 illustre une vue de détail du porte-outil 10 au sein duquel est monté l'outil 20. Le porte-outil 10 est fixé, notamment par vissage, à un coulisseau 97 intégré à la presse 100. Ce coulisseau 97 comprend notamment un corps présentant une forme cylindrique d'axe géométrique A97, qui coïncide avec l'axe A100.

Le déplacement en translation du coulisseau 97 selon l'axe A100, vers le posage 98, comme cela est représenté par la flèche en trait gras de la figure 1, induit le rapprochement de l'outil 20 vers le premier composant 1 préalablement positionné sur le deuxième composant 2, et ce jusqu'à ce que l'outil 20 vienne en contact avec le premier composant 1 pour permettre ensuite l'assemblage par chassage du premier composant 1 sur le deuxième composant 2.

La vitesse de translation du coulisseau 97 selon l'axe A100, ainsi que la force qui lui est appliquée, permettent de définir un chassage en force et/ou en position du premier composant sur le deuxième composant, ou encore un chassage en butée du premier composant à l'encontre du deuxième composant.

La presse 100 est de préférence une presse d'assemblage, à savoir une presse ou une potence permettant l'assemblage, en particulier le chassage, d'un premier composant avec un deuxième composant. La presse 100 représentée sur la figure 1 est une presse automatique, en particulier une servo-presse, à savoir une presse dotée d'un servomoteur (moteur électrique avec système de commande). Alternativement, la presse 100 peut être une presse manuelle, c'est-à-dire une presse utilisant l'énergie fournie par un opérateur.

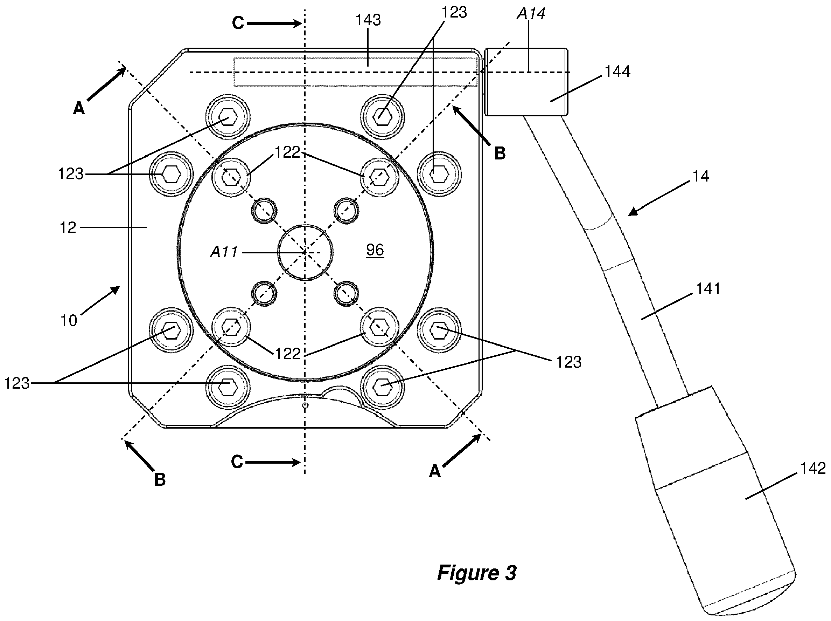

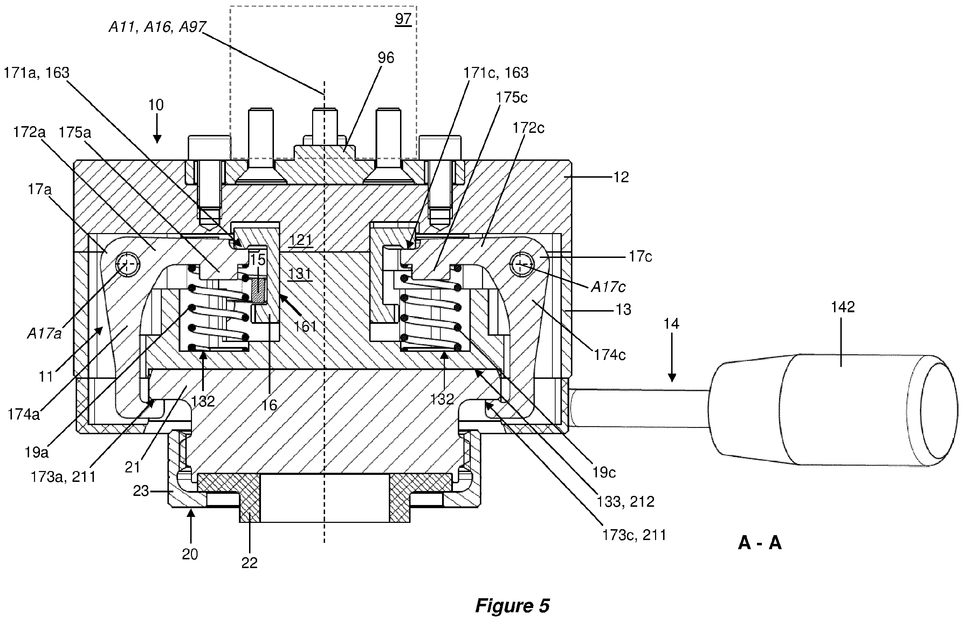

La figure 3 représente une vue de dessus du porte-outil 10 et de l'outil 20 et identifie différents plans selon lesquels sont réalisées différentes coupes longitudinales (relativement à un axe A11 du porte-outil) illustrées sur les figures 5 à 9.

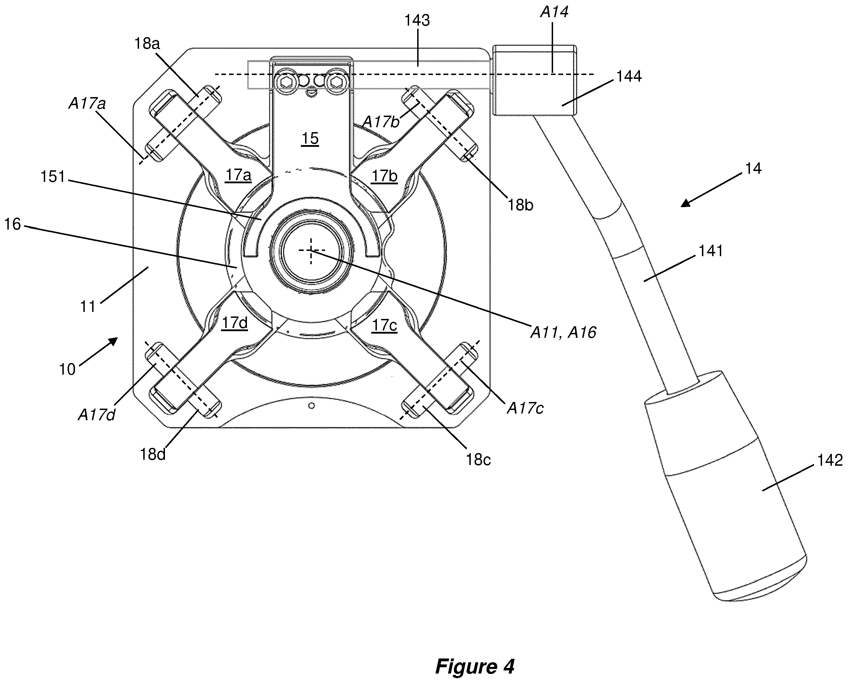

La figure 4 représente la même vue de dessus que celle de la figure 3, mais laisse apparaître des éléments constitutifs du porte-outil 10.

Le porte-outil 10 comprend :
- un axe A11,
- un organe d'actionnement 14, et
- des éléments de retenue 17a, 17b, 17c, 17d agencés pour retenir l'outil 20.

Le porte-outil est configuré et/ou agencé de sorte que les éléments de retenue 17a, 17b, 17c, 17d sont déplaçables d'une position activée à une position désactivée sous l'effet d'un déplacement, dans un premier sens, de l'organe d'actionnement 14, notamment sous l'effet d'un déplacement élémentaire, dans le premier sens, de l'organe d'actionnement 14.

L'axe A11 est de préférence destiné à coïncider avec les axes A97 et A100 lorsque le porte-outil 10 est monté sur la presse 100.

En particulier, les figures 3 et 4 illustrent distinctement l'organe d'actionnement 14 du porte-outil 10, qui est ici articulé en rotation selon un axe A14 agencé dans un plan perpendiculaire à l'axe A97 du coulisseau 97, ou perpendiculaire à l'axe A11 correspondant à l'axe géométrique d'un logement 11 du porte-outil 10, qui est notamment prévu pour accueillir les éléments constitutifs du porte-outil 10, comme représenté sur les figures 5 à 9.

Dans cette construction, l'organe d'actionnement 14 présente une forme coudée. L'organe d'actionnement 14 comprend :
- un bras ou levier 141 doté d'une poignée 142 d'actionnement, et
- un arbre 143 articulé selon l'axe A14.

Les éléments 141 et 143 sont reliés entre eux ou fixés l'un à l'autre de manière perpendiculaire ou sensiblement perpendiculaire par un élément de liaison 144. L'organe d'actionnement, en particulier le levier 141, est actionnable manuellement, notamment de haut en bas, par un opérateur ou une opératrice.

Comme indiqué précédemment, pour déplacer les éléments de retenue 17a, 17b, 17c, 17d d'une position activée à une position désactivée, il suffit de déplacer l'organe d'actionnement 14 selon un déplacement élémentaire :
- dans un seul sens d'une première butée à une deuxième butée, et
- selon une rotation ou une translation.

Dans le mode de réalisation représenté, le déplacement est une rotation. De préférence, l'amplitude du déplacement de rotation est inférieure à 20° ou à 10°, en particulier de l'ordre de 5°.

En alternative, le déplacement peut être une translation. De préférence, l'amplitude du déplacement de translation est inférieure à 100 mm ou à 50 mm.

De préférence, l'opérateur ou l'opératrice peut effectuer une seule manipulation ou un seul geste pour effectuer le déplacement élémentaire de la première butée à la deuxième butée. Par exemple, le geste est un geste de la main de l'opérateur ou l'opératrice, le geste étant sensiblement rectiligne ou curviligne. De préférence, l'opérateur ou l'opératrice n'a pas à agir pour effectuer le mouvement de retour de la deuxième butée à la première butée. De préférence, ce retour est assuré par une force de rappel élastique.

Une combinaison de deux translations successives, en particulier selon des directions différentes, n'est pas un mouvement élémentaire. Une combinaison de deux rotations successives, en particulier selon des sens différents, n'est pas un mouvement élémentaire. Une combinaison d'une rotation et d'une translation successives n'est pas un mouvement élémentaire.

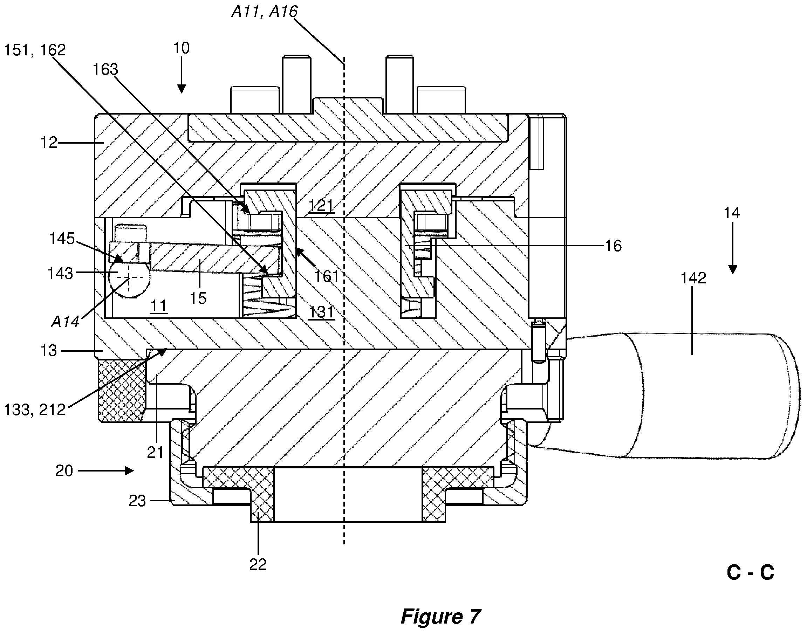

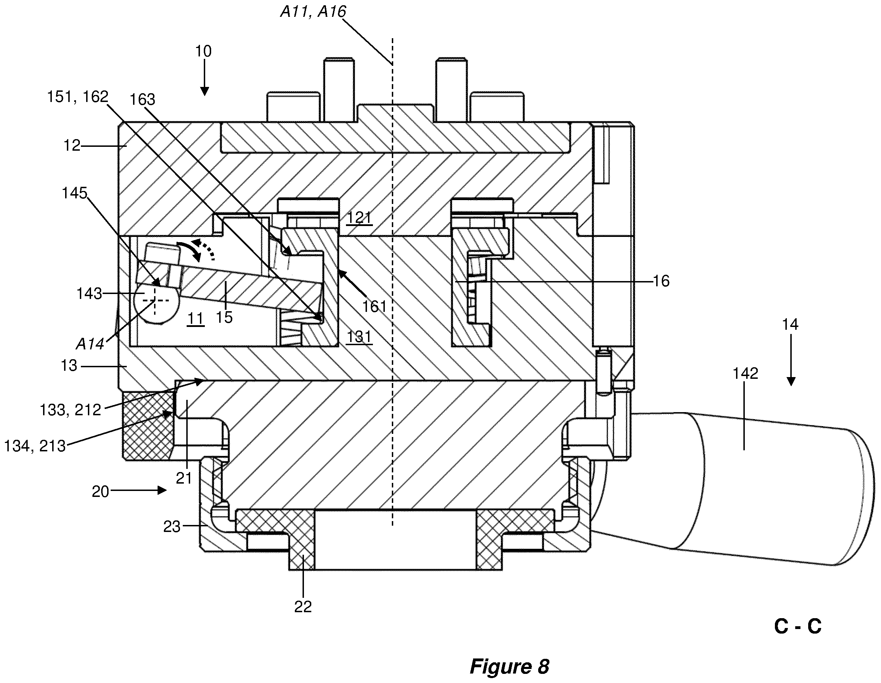

L'arbre 143 comprend une fourchette 15, notamment visible sur la figure 4, qui est par exemple fixée par vissage sur un méplat 145 formé sur ledit arbre (visible sur les figures 7, 8). Cette fourchette 15 est prévue pour coopérer avec une came 16 présentant une forme de cylindre évidé d'axe A16, qui est agencée coaxialement à l'axe A11 du logement 11. Cette coopération est telle que la came 16 est déplaçable, notamment en translation, sous l'effet du déplacement de la fourchette 15. En alternative à cette construction, l'arbre 143 et la fourchette 15 peuvent former une pièce monobloc.

Le logement 11 est par exemple formé par un bâti supérieur 12 et un bâti inférieur 13, qui sont notamment fixés entre eux par des vis 123, notamment huit vis 123, en particulier quatre paires de vis 123 (visibles sur la figure 3).

De préférence, la came 16 est guidée au moins en translation selon l'axe A11, d'une part grâce à la coopération d'un premier tenon 131 d'axe A11 formé sur le bâti inférieur 13 avec une ouverture traversante 161 de ladite came 16, et d'autre part grâce à la coopération d'un deuxième tenon 121 d'axe A11 formé sur le bâti supérieur 12 avec ladite ouverture 161 (visible sur les figures 5 à 9). La came peut ainsi être montée en liaison pivot glissant selon l'axe A16 sur les bâtis 12, 13.

En outre, la came 16 comprend une rainure au niveau de sa périphérie extérieure, qui définit respectivement des première et deuxième portées 162, 163 au niveau de chacune de ses extrémités longitudinales. La première portée 162 est prévue pour coopérer avec une extrémité 151 en forme de fourche de la fourchette 15 (plus particulièrement visible sur la figure 4), tandis que la deuxième portée 163 est prévue pour piloter les éléments de retenue 17, en agissant par exemple par contact direct sur ceux -ci.

Dans ce mode de réalisation de porte-outil, les éléments de retenue sont au nombre de quatre et se présentent sous la forme de griffes 17a, 17b, 17c, 17d, préférentiellement identiques, qui sont prévues pour coopérer avec l'outil 20 afin de le retenir au sein du logement 11 du porte-outil 10, comme cela est visible sur les figures 5 à 7.

Les éléments de retenue 17a, 17b, 17c, 17d présentent une forme coudée ou une forme en L. Chacun des éléments de retenue est articulé en rotation au niveau de son coude selon respectivement un axe A17a, A17b, A17c, A17d agencé orthoradialement relativement à l'axe A11, notamment par le biais respectivement de goupilles 18a, 18b, 18c, 18d (visibles sur la figure 4). Les axes sont ainsi agencés dans un plan ou dans plusieurs plans perpendiculaires à l'axe A11 du porte-outil 10. Préférentiellement, ces griffes sont équiréparties autour de l'axe A11. En particulier, les goupilles 18a, 18b, 18c, 18d sont agencées orthoradialement relativement à l'axe A11 et sont préférentiellement équiréparties autour de l'axe A11.

Chacune de ces griffes 17a, 17b, 17c, 17d comprend une portée 171a, 171b, 171c, 171d prévue pour coopérer, notamment par contact direct, avec la deuxième portée 163 de la came 16, ainsi qu'une portée 173a, 173b, 173c, 173d prévue pour coopérer avec l'outil 20.

Préférentiellement, les portées 171a, 171b, 171c, 171d et 173a, 173b, 173c, 173d sont parallèles ou sensiblement parallèles.

La portée 171a, 171b, 171c, 171d est formée à une extrémité d'une première portion 172a, 172b, 172c, 172d de griffe orientée radialement relativement à l'axe A11 (dans une position activée des éléments de retenue), tandis que la portée 173a, 173b, 173c, 173d est formée à une extrémité d'une deuxième portion 174a, 174b, 174c, 174d agencée perpendiculairement ou sensiblement perpendiculairement à la première portion 172a, 172b, 172c, 172d.

Avantageusement, chacune de ces griffes 17a, 17b, 17c, 17d est rappelée élastiquement, notamment indépendamment les unes des autres, à l'encontre de la came 16, en particulier à l'encontre de la deuxième portée 163 de la came 16. Ce rappel de chacune des griffes 17a, 17b, 17c, 17d est par exemple assuré par des ressorts 19a, 19b, 19c, 19d distincts, identiques ou non, en particulier dont les forces de rappel peuvent être identiques ou non. Avantageusement, une telle conception permet de faire en sorte que les griffes 17a, 17b, 17c, 17d puissent coopérer avec l'outil 20 de manière indépendante. Ainsi, les éléments de retenue 17a, 17b, 17c, 17d sont déplaçables selon leurs axes respectifs sous l'effet de la came 16.

Ces ressorts 19a, 19b, 19c, 19d présentent ici une forme hélicoïdale. Ils sont avantageusement disposés parallèlement à l'axe A11. Ils sont de préférence intercalés entre une surface d'appui 132 du bâti inférieur 13 et chacune des premières portions 172a, 172b, 172c, 172d des griffes, en particulier une saillie 175a, 175b, 175c, 175d de chacune de ces premières portions permettant de positionner les extrémités des ressorts et empêchant leur mise en biais.

Dans une première configuration du porte-outil 10, la coopération entre ces ressorts 19a, 19b, 19c, 19d et les griffes 17a, 17b, 17c, 17d permet de maintenir l'outil 20 au sein du logement 11. Les figures 5, 6 et 7 illustrent une telle première configuration, dite de fonctionnement. Les éléments de retenue sont alors en position activée.

Dans le mode de réalisation représenté, l'outil 20 comprend une géométrie, notamment une surface d'appui 212, une portée 211 et une périphérie 213, configurée pour coopérer avec le porte-outil 10. En particulier, l'outil 20 comprend :
- un support 21, et
- une bague de chassage 22,
la bague de chassage 22 étant fixée sur le support 21. De préférence, la géométrie configurée pour coopérer avec le porte-outil 10 est réalisée sur le support 21.

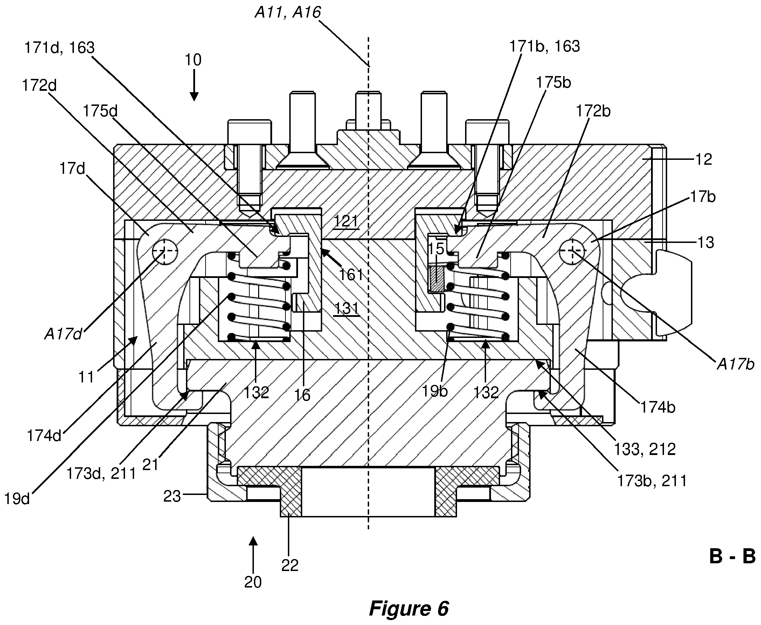

Les figures 5 et 6 illustrent notamment les portées 173a, 173b, 173c, 173d respectives des griffes 17a, 17b, 17c, 17d coopérant chacune avec la portée 211 du support 21 de l'outil 20, de sorte à plaquer la surface d'appui 212 dudit support 21 à l'encontre d'une surface d'appui 133 du bâti 13, la portée 211 et la surface d'appui 212 étant préférentiellement parallèles. Ces surfaces d'appui 133, 212 sont prévues pour transmettre les efforts de pressage. L'organe d'actionnement 14 et la fourchette 15 sont quant à eux maintenus en position par la came 16 qui est rappelée élastiquement par les ressorts 19a, 19b, 19c, 19d par l'intermédiaire des griffes 17a, 17b, 17c, 17d en direction du bâti 12. Dans cette première configuration, les portées 171a, 171b, 171c, 171d et les portées 173a, 173b, 173c, 173d sont avantageusement agencées perpendiculairement à l'axe A11 afin d'éviter tout risque de démontage de l'outil 20 du porte-outil 10. Dans cette première configuration, l'outil 20 est avantageusement centré au sein du logement 11 par la coopération de la périphérie extérieure 213 du support 21 et d'un logement 134 formé au sein du bâti 13 ou sur un élément rapporté sur le bâti 13 (comme cela est notamment visible sur la figure 8). Préférentiellement, la périphérie 213 et le logement 134 présentent des formes cylindriques complémentaires.

La figure 8 illustre une phase d'actionnement de l'organe 14, en particulier une phase d'actionnement de la poignée 142 du « haut vers le bas », induisant une rotation de l'arbre 143 et de sa fourchette 15 dans le sens horaire autour de l'axe A14, comme cela est représenté par la flèche en trait continu de la figure 8. Cette rotation entraîne la translation de la came 16 vers le bâti 13 à l'encontre des ressorts 19a, 19b, 19c, 19d. Cela a pour conséquence d'induire la mise en rotation des griffes 17a, 17b, 17c, 17d autour de leur axe respectif A17a, A17b, A17c, A17d, de sorte à permettre leur écartement de l'outil 20, en particulier du support 21.

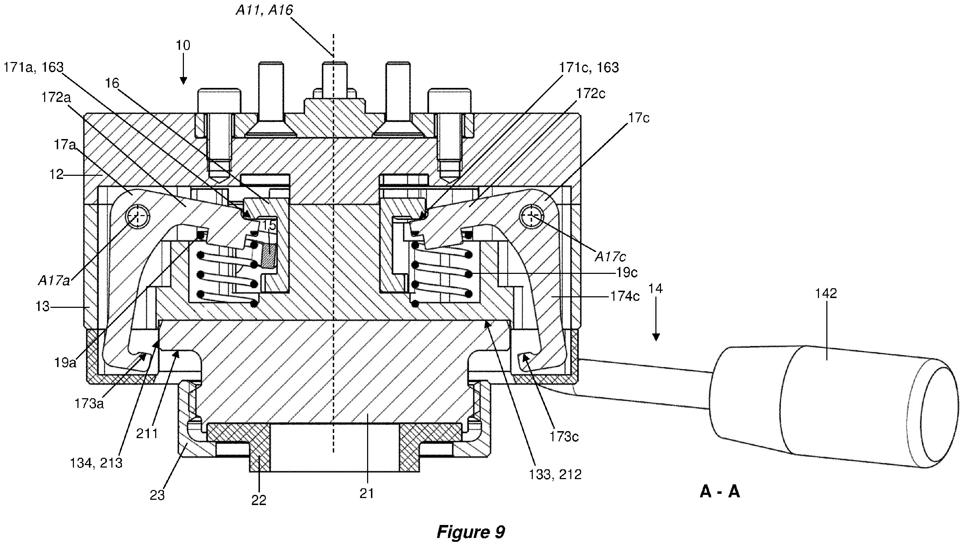

A titre d'exemple, la figure 9 illustre les griffes 17a et 17c une fois escamotées du support 21, c'est-à-dire une position dans laquelle les éléments de retenue, en particulier les griffes, sont désactivés. Leur position respective permet de définir une deuxième configuration du porte-outil 10, dite de montage / démontage. Dans cette deuxième configuration, les portées 173a et 173c sont notamment suffisamment éloignées de la portée 211 pour permettre le déplacage des surfaces 133 et 212, et ainsi permettre le démontage de l'outil 20 du porte-outil 10. Cette deuxième configuration est ici obtenue en maintenant la poignée 142 appuyée, car celle-ci subit les forces de rappel exercées par chacun des ressorts 19a, 19b, 19c, 19d par l'intermédiaire de la came 16 et de la fourchette 15. Une fois la poignée 142 relâchée, celle-ci revient ainsi en position « haute » sous l'effet de ces ressorts, ce qui induit une rotation de l'arbre 143 et de sa fourchette 15 dans le sens anti-horaire autour de l'axe A14, comme cela est représenté par la flèche en trait pointillé de la figure 8. Ainsi, l'organe d'actionnement 14 est rappelé élastiquement sous l'effet de l'élément élastique 19a, 19b, 19c, 19d, notamment par l'intermédiaire de la came 16 liant cinématiquement l'organe d'actionnement 14 et l'élément élastique 19a, 19b, 19c, 19d. En conséquence, l'opérateur ou l'opératrice n'a pas à agir pour que le porte-outil 20 revienne en configuration de fonctionnement, à savoir une configuration dans laquelle les éléments de retenue sont en position activée.

Un mode d'exécution d'un procédé de fonctionnement d'un porte-outil selon l'invention est décrit ci-après.

Pour déposer un outil 20 se trouvant préalablement monté dans le porte-outil 10, le procédé de fonctionnement comprend les étapes suivantes :
- une étape de déplacement, dans un premier sens, de l'organe d'actionnement 14, notamment de déplacement élémentaire dans un premier sens de l'organe d'actionnement 14, par un opérateur ou une opératrice, cette étape entraînant
- une étape de désactivation des éléments de retenue 17a, 17b, 17c, 17d sous l'effet de l'étape de déplacement entraînant une libération dudit outil 20.

L'étape de déplacement de l'organe d'actionnement 14 est une étape de déplacement d'une première position vers une deuxième position selon une première direction, en particulier une mise en rotation de l'organe d'actionnement 14 selon un premier sens, de sorte à atteindre la deuxième configuration du porte-outil et ainsi permettre le démontage d'un outil 20 préalablement monté au sein du logement 11 du porte-outil 10.

Pour monter un nouvel outil 20 dans le porte-outil 10 dans lequel aucun outil ne se trouve, le procédé de fonctionnement comprend, consécutivement aux étapes décrites précédemment permettant d'amener les éléments de retenue en position désactivée (et de retirer un éventuel outil se trouvant dans le porte-outil), les étapes qui suivent :
- une étape de maintien des éléments de retenue 17a, 17b, 17c, 17d en position désactivée,
- une étape d'introduction d'un outil 20 dans le porte-outil 10,
- une étape de déplacement de l'organe d'actionnement 14, dans un deuxième sens, opposé au premier sens, notamment une étape de déplacement élémentaire dans le deuxième sens de l'organe d'actionnement. Ce déplacement est de préférence réalisé sous l'effet de l'élément de rappel élastique 19a, 19b, 19c, 19d, par relâchement de l'organe d'actionnement 14 par l'opérateur ou l'opératrice. Ce déplacement dans le deuxième sens a pour effet de reconfigurer le porte-outil en configuration de fonctionnement, les éléments de retenue étant ramenés dans leur position activée. Ainsi, le porte-outil 10 est configuré et/ou agencé de sorte que les éléments de retenue sont déplaçables d'une position désactivée à une position activée sous l'effet d'un déplacement, dans un deuxième sens, opposé au premier sens, de l'organe d'actionnement 14, notamment sous l'effet d'un déplacement élémentaire, dans le deuxième sens, de l'organe d'actionnement 14.

Alternativement, pour monter un nouvel outil 20 dans le porte-outil 10 dans lequel aucun outil ne se trouve, le procédé de fonctionnement comprend les étapes qui suivent alors que les éléments de retenue se trouvent en position activée :
- une étape de mise en contact de l'outil 20 et du porte-outil 10,
- une étape d'application d'un effort de l'outil 20 sur le porte-outil 10 de sorte à escamoter les éléments de retenue 17a, 17b, 17c, 17d et à mettre en place l'outil 20 dans le porte-outil 10, et
- une étape d'activation des éléments de retenue 17a, 17b, 17c, 17d sous l'effet de l'élément de rappel élastique 19a, 19b, 19c, 19d.

Pour réaliser l'opération d'escamotage, l'outil et les éléments de retenue présentent de préférence des surfaces chanfreinées ou des surfaces de came permettant de provoquer un basculement des éléments de retenue à l'encontre des ressorts lorsqu'on agit pour exercer un effort axial (selon l'axe A11) de l'outil 20 sur le porte-outil 10. Ainsi, il est possible d'introduire l'outil au sein du logement du porte-outil sans manipulation préalable de l'organe d'actionnement. Néanmoins, dans ce cas de figure, le déplacement des éléments de retenue induit le déplacement de l'organe d'actionnement (en l'absence d'un système de débrayage supplémentaire). Ainsi, le porte-outil est configuré et/ou agencé de sorte que les éléments de retenue sont déplaçables d'une position activée (sans outil) à une position activée (avec l'outil mis en place) en passant par une position désactivée. Le passage de la position activée (sans outil) à la position désactivée se produit sous l'effet d'une application d'un effort d'un outil à l'encontre du porte-outil. Le passage de la position désactivée à la position activée (avec l'outil mis en place) se produit sous l'effet de l'élément de rappel élastique.

En conséquence, un déplacement de l'organe d'actionnement selon un premier sens engendre un écartement des éléments de retenue, ou inversement. En outre, un déplacement de l'organe d'actionnement selon un deuxième sens, opposé au premier sens, engendre un resserrement des éléments de retenue.

Dans le mode de réalisation décrit, l'organe d'actionnement et les éléments de retenue sont articulés selon des axes de rotation agencés dans un plan ou plusieurs plans perpendiculaires à l'axe géométrique du logement du porte-outil. Toutefois, en alternative, l'organe d'actionnement et/ou les éléments de retenue peuvent être articulés selon des axes de rotation agencés parallèlement ou sensiblement parallèlement à l'axe géométrique du logement du porte-outil. Par exemple, les éléments de retenue pourraient être agencés de la même manière que des lamelles d'un diaphragme. Dans ce cas de figure, l'organe d'actionnement pourrait par exemple être mobile en rotation autour de l'axe géométrique du logement du porte-outil.

De manière plus générale, l'organe d'actionnement et/ou les éléments de retenue peuvent se mouvoir selon tout autre type de déplacement, comme une translation par exemple.

En complément des éléments de retenue, le porte-outil et/ou l'outil peuvent comprendre des détrompeurs afin de garantir une bonne orientation angulaire de l'outil par rapport au porte-outil et/ou de l'outil par rapport au premier composant.

Dans le mode de réalisation décrit, le coulisseau 97 est fixé sur le porte-outil 10 par vissage, par le biais d'une plaquette 96 elle-même fixée sur le bâti 12 par des vis 122, en particulier quatre vis 122 (comme visible sur les figures 3 et 5). Bien entendu, toute autre solution d'assemblage pourrait être mise en œuvre.

Dans le mode de réalisation décrit, l'outil comprend un support 21, une bague de chassage 22 prévue pour venir en contact avec le premier composant 1, ainsi qu'une bague d'assemblage 23 prévue pour permettre la fixation de la bague 22 de chassage sur le support 21, notamment par vissage. A cet effet, le support 21 comprend un filetage formé sur une paroi extérieure, qui est prévu pour coopérer avec un taraudage formé au sein d'une portion de réception de la bague d'assemblage 23. Bien entendu, l'outil 20 pourrait prendre une toute autre forme. Par exemple, celui-ci pourrait être monobloc. Alternativement, celui-ci pourrait prendre la forme d'un assemblage plus complexe, et notamment comprendre un ou plusieurs ressorts prévus pour reprendre l'effort de chassage.

Les premier et deuxième composants 1 et 2 sont préférentiellement des composants horlogers. Dans un premier exemple, le premier composant peut être un composant d'habillage comme un disque de lunette et le deuxième composant peut être un composant d'habillage comme une bague de lunette. Dans un deuxième exemple, le premier composant peut être un composant d'habillage comme une glace (comprenant éventuellement un joint d'étanchéité) et le deuxième composant peut être un composant d'habillage comme une carrure (comprenant éventuellement un joint d'étanchéité). Les premier et deuxième composants peuvent également se présenter sous la forme de composants du mouvement. Dans un troisième exemple, le premier composant peut être un pignon et le deuxième composant peut être un arbre. Dans un quatrième exemple, le premier composant peut être une pierre et le deuxième composant peut être une ébauche.

Dans le mode de réalisation décrit, la presse est une presse permettant le chassage de deux composants, en particulier deux composants horlogers. Il est tout à fait possible d'exploiter un tel porte-outil pour une presse afin de permettre le rivetage ou le sertissage de deux composants.

Dans le mode de réalisation décrit, le porte-outil est prévu pour être manipulé par un opérateur ou une opératrice. De par sa conformation, celui-ci peut également être avantageusement manipulé par un dispositif automatisé. Par exemple, ce dispositif peut comprendre un moteur, notamment un arbre de moteur, en prise directe ou indirecte avec l'organe d'actionnement 14. En particulier, le moteur peut être actionné, par un opérateur ou une opératrice, sous l'effet d'une commande annexe telle qu'un bouton poussoir. Une telle solution peut être particulièrement avantageuse selon la conformation de la presse ou de son environnement. Le dispositif automatisé permet d'automatiser les manœuvres de l'organe d'actionnement.

Ainsi, l'invention ne se limite pas à un porte-outil dont l'organe d'actionnement 14 est manœuvrable manuellement.

Les solutions décrites plus haut présentent la particularité de comprendre un organe d'actionnement, ainsi que des éléments de retenue, ces éléments de retenue étant prévus pour permettre le montage ou le démontage d'un outil sur un porte-outil, et ce sous l'effet d'une simple manipulation de l'organe d'actionnement.

En particulier, un déplacement de l'organe d'actionnement selon un premier sens engendre un écartement des éléments de retenue et permet ainsi le démontage d'un outil du porte-outil, tandis qu'un déplacement de l'organe d'actionnement selon un deuxième sens, opposé au premier, engendre un resserrement des éléments de retenue et permet ainsi de retenir, voire de monter un outil sur le porte-outil.

Le premier sens peut être un sens horaire, comme cela est représenté par la flèche en trait continu de la figure 8, et le deuxième sens peut être un sens anti-horaire comme cela est représenté par la flèche en trait pointillé de la figure 8. Alternativement, le premier sens peut être un sens anti-horaire et le deuxième sens un sens horaire.

Les solutions décrites améliorent l'agrément de l'opération de changement d'outils pour potence ou presse, en proposant un porte-outil permettant d'une part de faciliter au mieux l'opération de montage ou de démontage d'un outil, et d'autre part de minimiser le temps nécessaire à ladite opération.

Avantageusement, comme vu précédemment, le déplacement des éléments de retenue selon au moins une direction s'effectue sous l'effet du déplacement de l'organe d'actionnement, à la différence des solutions connues de l'art antérieur au sein desquelles il est nécessaire d'effectuer des déplacements de l'outil et/ou du porte-outil pour permettre un déplacement des éléments de retenue. Autrement dit, les éléments de retenue sont déplaçables relativement au porte-outil sous l'effet du déplacement de l'organe d'actionnement.

## Revendications

1. Porte-outil (10) pour presse (100), notamment pour presse d'assemblage (100), comprenant :
- un axe (A11),
- un organe d'actionnement (14), et
- des éléments de retenue (17a, 17b, 17c, 17d) agencés pour retenir un outil (20),
le porte-outil (10) étant configuré et/ou agencé de sorte que les éléments de retenue (17a, 17b, 17c, 17d) sont déplaçables d'une position activée à une position désactivée sous l'effet d'un déplacement, dans un premier sens, de l'organe d'actionnement (14), notamment sous l'effet d'un déplacement élémentaire, dans le premier sens, de l'organe d'actionnement (14).

2. Porte-outil (10) selon la revendication 1, **caractérisé en ce que** le porte-outil (10) est configuré et/ou agencé de sorte que les éléments de retenue sont déplaçables d'une position désactivée à une position activée sous l'effet d'un déplacement, dans un deuxième sens, opposé au premier sens, de l'organe d'actionnement (14), notamment sous l'effet d'un déplacement élémentaire, dans le deuxième sens, de l'organe d'actionnement (14).

3. Porte-outil (10) selon la revendication 1 ou 2, **caractérisé en ce que** le porte-outil est configuré et/ou agencé de sorte que les éléments de retenue sont déplaçables d'une position désactivée à une position activée sous l'effet d'une introduction d'un outil (20) dans le porte-outil (10).

4. Porte-outil (10) selon l'une des revendications précédentes, **caractérisé en ce que** l'organe d'actionnement (14) est articulé en rotation selon un axe (A14) et/ou **en ce que** les éléments de retenue (17a, 17b, 17c, 17d) sont articulés en rotation selon des axes (A17a, A17b, A17c, A17d), les axes étant notamment agencés dans un plan ou dans plusieurs plans perpendiculaires à l'axe (A11) du porte-outil (10).

5. Porte-outil (10) selon la revendication précédente, **caractérisé en ce que** les éléments de retenue sont des griffes (17a, 17b, 17c, 17d) présentant chacune un coude et **en ce que** :
- chaque griffe est articulée en rotation au niveau de son coude, notamment par le biais d'une goupille (18a, 18b, 18c, 18d) montée dans un bâti (12, 13) du porte-outil (10), et/ou
- les griffes (17a, 17b, 17c, 17d) sont équiréparties ou sensiblement équiréparties autour de l'axe (A11) du porte-outil (10).

6. Porte-outil (10) selon l'une des revendications précédentes, **caractérisé en ce que** les éléments de retenue (17a, 17b, 17c, 17d) sont rappelées élastiquement, sous l'effet d'un élément de rappel élastique (19a, 19b, 19c, 19d), notamment des ressorts (19a, 19b, 19c, 19d), en particulier de ressorts hélicoïdaux agencés parallèlement à l'axe (A11).

7. Porte-outil (10) selon la revendication précédente, **caractérisé en ce que** l'organe d'actionnement (14) est rappelé élastiquement sous l'effet de l'élément élastique (19a, 19b, 19c, 19d), notamment par l'intermédiaire d'une came (16) liant cinématiquement l'organe d'actionnement (14) et l'élément élastique (19a, 19b, 19c, 19d).

8. Porte-outil (10) selon l'une des revendications précédentes, **caractérisé en ce que** le porte-outil comprend une came (16), les éléments de retenue (17a, 17b, 17c, 17d) étant déplaçables selon leurs axes respectifs sous l'effet de la came (16).

9. Porte-outil (10) selon la revendication précédente, **caractérisé en ce que** l'organe d'actionnement (14) comprend une fourchette (15) et **en ce que** la came (16) est déplaçable, notamment en translation, sous l'effet du déplacement de la fourchette (15).

10. Porte-outil (10) selon l'une des revendications précédentes, **caractérisé en ce que** l'organe d'actionnement (14) comprend :
- un levier (141) actionnable, notamment par un opérateur ou une opératrice, par exemple un levier doté d'une poignée (142) et/ou doté d'un coude, et
- un arbre (143) articulé selon un axe (A14), l'arbre (143) comprenant notamment la fourchette (15) ou l'arbre (143) et la fourchette (15) étant fixés l'un à l'autre,
le levier (141) et l'arbre (143) étant fixés l'un à l'autre, notamment de manière perpendiculaire ou sensiblement perpendiculaire.

11. Outil (20) comprenant :
- un support (21) présentant une géométrie, notamment une surface d'appui (212), une portée (211) et une périphérie (213), configurée pour coopérer avec un porte-outil (10) selon l'une des revendications précédentes, et
- une bague de chassage (22).

12. Presse (100) comprenant un porte-outil (10) selon l'une des revendications 1 à 10 et/ou un outil selon la revendication 11.

13. Procédé de fonctionnement d'un porte-outil (10) selon l'une des revendications 1 à 10, **caractérisé en ce qu'**il comprend :
- une étape de déplacement, dans un premier sens, de l'organe d'actionnement (14), notamment de déplacement élémentaire dans un premier sens de l'organe d'actionnement (14), par un opérateur ou une opératrice,
- une étape de désactivation des éléments de retenue (17a, 17b, 17c, 17d) sous l'effet de l'étape de déplacement entraînant une libération d'un outil (20).

14. Procédé de fonctionnement d'un porte-outil (10) selon l'une des revendications 1 à 10, **caractérisé en ce qu'**il comprend :
- une étape de déplacement, dans un premier sens, de l'organe d'actionnement, notamment de déplacement élémentaire dans un premier sens de l'organe d'actionnement, par un opérateur ou une opératrice,
- une étape de désactivation des éléments de retenue (17a, 17b, 17c, 17d) sous l'effet de l'étape de déplacement,
- une étape d'introduction d'un outil (20) dans le porte-outil (10),
- une étape de déplacement de l'organe d'actionnement (14), dans un deuxième sens, opposé au premier sens, notamment une étape de déplacement élémentaire dans le deuxième sens de l'organe d'actionnement, sous l'effet d'un élément de rappel élastique (19a, 19b, 19c, 19d).

15. Procédé de fonctionnement d'un porte-outil (10) selon la revendication 13 ou 14, **caractérisé en ce qu'**il comprend :
- une étape de mise en contact d'un outil (20) et du porte-outil (10),
- une étape d'application d'un effort de l'outil (20) sur le porte-outil (10) de sorte à escamoter les éléments de retenue (17a, 17b, 17c, 17d) et à mettre en place l'outil (20) dans le porte-outil (10),
- une étape d'activation des éléments de retenue (17a, 17b, 17c, 17d) sous l'effet d'un élément de rappel élastique (19a, 19b, 19c, 19d).
